# EUROPEAN PATENT SPECIFICATION

(11) **EP 0 479 737 B1**
(45) Date of publication and mention of the grant of the patent: **20.12.1995**
(21) Application number: 91830399.1
(22) Date of filing: 25.09.1991
(51) Int. Cl.: F16H 61/06, F16D 48/02

(54) **A hydraulic circuit for the powershift operation of clutches for tractor gearboxes**
Hydraulikkreis zur Betätigung von Lastschaltkupplungen für Zugmaschinengetriebe
Circuit hydraulique pour actionner les embrayages à friction à passage de vitesse sous charge pour des transmissions de tracteurs

(30) Priority: 03.10.1990 IT 6775690
(43) Date of publication of application: 08.04.1992
(73) Proprietor: SAME S.p.A., I-24047 Treviglio (Bergamo) (IT)
(72) Inventor: Assanelli, Andrea, I-24047 Treviglio Bergamo (IT)
(74) Representative: Marchitelli, Mauro

(56) References cited:
- EP-A- 0 235 892
- EP-A- 0 356 527
- EP-A- 0 372 073
- DE-C- 3 811 615
- GB-A- 2 213 550
- PATENT ABSTRACTS OF JAPAN, vol. 10, no. 130 (M-478)(2187), 14 May 1986 & JP-A-60 256 630 (KAWASAKI JUKOGYO K.K.) 18 December 1985

## Description

The present invention relates to hydraulic circuits for the power-shift operation of clutches for tractor gearboxes, in which the clutches have respective friction discs and respective hydraulic actuators connected to supply and exhaust means by respective valve units operated by electronically-controlled piloting means for engaging and disengaging the clutches in combination in order to change gear ratios without interrupting the transmission of torque.

In particular, the invention is concerned with an operating circuit of this type in which the valve units include respective electronically-controlled on-off valves, respective sequence valves piloted by the pressures in the respective actuators, and an electronically-controlled proportional pressure-reduction valve for supplying the clutch to be engaged according to a predetermined sequence.

DE-C-38 11 615 shows a hydraulic circuit for operating a plurality of clutches of a gearbox. This known circuit has a single pump connected to a clutch control valve through a single supply line. A pressure regulating unit is connected to the supply line to reduce the pressure and disengage the clutches before effecting a change of the transmission ratio.

EP-A-0 235 892 discloses a method of operating clutches of a vehicle transmission provided with electrically-operated fluid valves which are individually controlled to direct fluid pressure to respective clutches.

A control circuit according to the preamble of Claim 1 is known from EP-A-0 315 596, which shows a circuit including two separate pumps for low and high pressures respectively, of which the former is connected to the clutch actuators through respective first sequence valves. The high-pressure pump is connected to the clutch actuators by a first line through respective electronically-controlled on-off valves which control communication between the first sequence valves and an exhaust line. The electronically-controlled proportional pressure-reduction valve which pilots the first sequence valves is in the first line. A second line connects the high-pressure pump to the clutch actuators through the sequence valves which are piloted by the pressures in the actuators.

With this arrangement, the sequence for the supply of the clutch to be engaged provides for an initial stage in which the friction discs are brought together by a fairly low supply pressure, followed by a progressive increase in pressure up to the working pressure which is then maintained.

The circuit according to the present invention constitutes an improvement of that known from EP-A-315596 and its object, in particular, is to simplify the known circuit by reducing its components, thus making it cheaper and at the same time more compact and less bulky.

A further object of the invention is to improve the functional efficiency of the circuit, particularly as regards the initial stage of the operation of the clutch to be engaged.

According to the invention, these objects are achieved by virtue of the fact that the supply and exhaust means include a single hydraulic pump connected by a first delivery line to the electronically-controlled on-off valves through the electroncially-controlled proportional pressure-reduction valve and respective one-way valves, the pump being connected directly by a second delivery line to the sequence valves which are piloted by the pressures in the respective actuators, and an exhaust line connected directly to the on/off valves, and in that the predetermined sequence followed by the proportional pressure-reduction valve for supplying the clutch to be engaged provides for an initial stage in which the friction discs of the clutch are brought together rapidly by a pressure of the order of 18 bars, followed by a first intermediate stage in which this movement together is maintained by a pressure of the order of 3 bars, a second intermediate stage in which the pressure is modulated between 3 bars and a working pressure of the order of 20 bars, and a final stage of maintaining the working pressure, in which the actuator is supplied by the respective sequence valve and the respective one-way valve interrupts the communication between the actuator and the electronically-controlled proportional pressure-reduction valve.

Compared with the circuit known from EP-A-315596, the circuit according to the invention thus uses a single pump and does not need sequence valves piloted by the proportional pressure-reduction valve. This makes the circuit simpler, cheaper and less bulky and also saves energy because there is less hydraulic fluid in circulation. Moreover, the initial stage in which the friction discs of the clutch to be engaged are brought together rapidly at a high pressure close to the final working pressure improves the operation of the clutches.

The invention will now be described in detail with reference to the appended drawings provided purely by way of non-limiting example, in which:
Figure 1 shows the layout of a hydraulic operating circuit according to the invention, and
Figure 2 is a graph showing the way in which the circuit operates during a modulated change-over of two clutches.

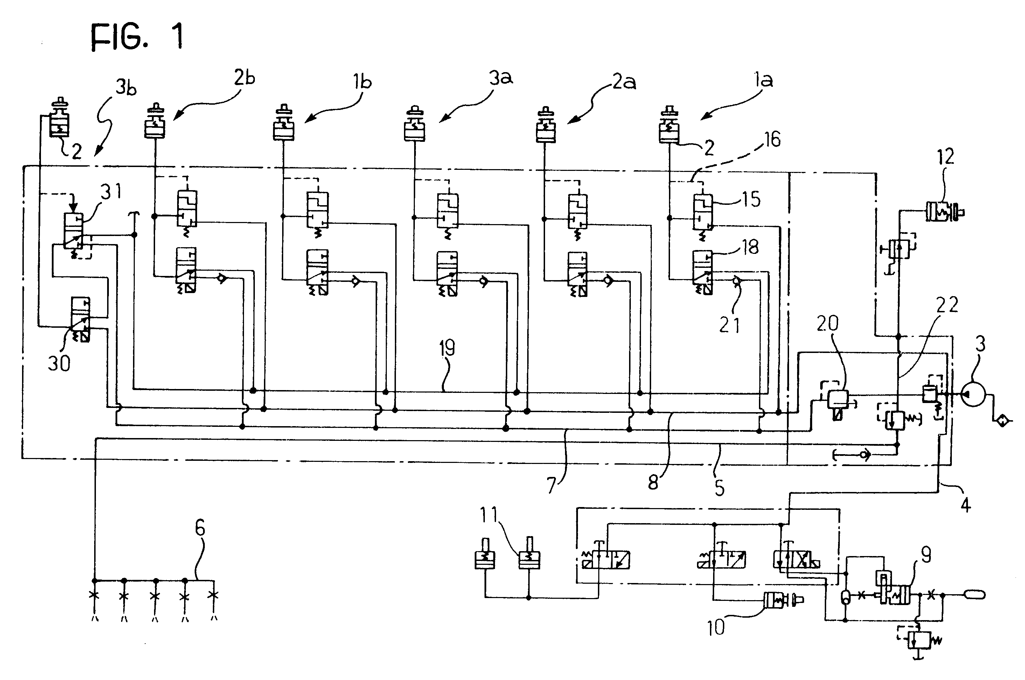

Figure 1 shows the layout of a circuit for operating a series of power-shift friction clutches for tractor gearboxes. The embodiment illustrated relates to a gearbox with two units each having three gear ratios and hence three clutch units with respective valve members, indicated 1a, 2a, 3a and 1b, 2b, 3b, respectively.

The general characteristics of the clutches are generally known and will not therefore be described in detail. Moreover, the units 1a, 2a, 3a and 1b, 2b, are identical so the following description relating to the unit 1a also applies to the other units except for the unit 3b whose characteristics will be described below.

For the purposes of the present invention, it suffices to say that the clutch of each unit includes, in known manner, respective friction discs, not shown, cooperating with a hydraulic actuator which engages and disengages the clutch and the thrust chamber of which is indicated 2.

A single hydraulic pump 3 is provided for supplying the thrust chamber 2 and is connected to the five units 1a-2b by a first delivery line 7. A supply line 5 supplies the lubrication circuit 6 of the tractor gearbox and a supply line 22 supplies a unit for operating the main clutch 12 of the tractor from the other.

The pump 3 also supplies, at a pressure of the order of 20 bars, a second delivery line 4 of which one end is connected to the other hydraulic units normally fitted to the tractor and, in particular, to a unit 9 for operating the power take-off, a unit 10 for engaging and disengaging the four-wheel drive, and two units 11 for locking and unlocking the differentials.

A branch 8 from the other end of the high-pressure delivery line 4 is connected to the thrust chamber 2 of each actuator through respective sequence valves 15 which are piloted hydraulically by the pressures in the chambers 2 through respective piloting lines 16.

An electronically-controlled, proportional pressure-reduction solenoid valve 20 is connected in the supply line 7 in which the pressure is normally between 3 and 18 bars, upstream of the connection of that line to the six units 1a-3b, and is arranged to define the predetermined modulation slopes for the various clutches in the manner explained below.

Downstream of the proportional pressure-reduction solenoid valve, the line 7 is connected to the thrust chambers 2 through respective on-off solenoid valves 18 which, in the de-energised condition, connect the thrust chambers 2 to an exhaust line 19. This applies to all six units except the unit 3b.

A one-way valve 21 is connected between each on-off valve 18 and the proportional valve 20 for preventing a back-flow towards the proportional valve 20.

As will be clear from the following, the proportional pressure-reduction valve 20 enables several clutches to be modulated simultaneously, the actuators of the clutches to be engaged being supplied progressively in dependence on the pressures reached in the thrust chambers 2 of the actuators and in a sequence which provides for four successive stages in which the friction discs are brought together, in which this movement together is maintained, in which the pressure is modulated up to the working pressure, and in which the working pressure is maintained, respectively. This sequence is performed once the preselected clutches have been activated by the respective on-off valves 18 so that the modulated change-over can be effected for several clutches simultaneously.

The proportional pressure-reduction valve 20 is controlled electronically by a generally conventional processing unit, not shown in the drawings, by means of which the engagement and disengagement sequences are piloted by the valve 20 according to time/pressure calibrations which depend on the operating conditions of the tractor. These operating conditions, which are detected by conventional sensors, not shown, and are transformed into electrical signals sent to the electronic control unit, are essentially the following:
- the starting gear ratio and the gear ratio to be attained,
- the speed of the tractor,
- the rate of rotation of the engine,
- the temperature of the oil in the gearbox,
- the loading conditions of the machine,
- the permitted degrees of comfort and wear,
- the working range and direction.

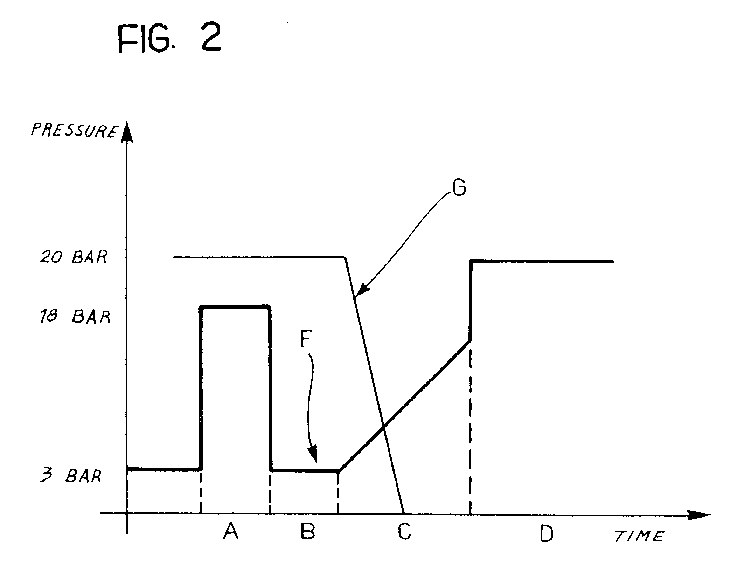

The sequence will now be described below in relation to the clutch unit 1a and with reference to the graph of Figure 2.

### The bringing together of the friction discs

Upon a command to engage the clutch given manually by the operator of the tractor, the electronic unit simultaneously activates the on-off solenoid valve 18 in question and starts the modulation of the proportional solenoid valve 20. During this stage, the proportional valve 20 reaches the maximum position envisaged for bringing the friction discs together, which corresponds to a pressure of the order of 18 bars and is close to the final working pressure of the clutch. The supply pressure of 18 bars, which is supplied for about 0.1 sec, brings the friction discs together rapidly. This stage is represented by the letter A in the graph of Figure 2, in which the line F is a pressure/time curve for the clutch unit during its engagement, whilst the line G is a curve for the clutch unit which is simultaneously disengaged.

At the end of the bringing-together stage, the pressure is kept at a value of 3 bars for a period of 0.1 sec. This stage is indicated B in the graph of Figure 2.

### Modulation slope

At the end of the stages in which the friction discs are brought together and in which this movement together is maintained, the electronic unit operates the proportional valve 20 to impose a predetermined modulation slope in dependence on the processing parameters of the unit. This stage, which is represented by the portion C of the curve F of Figure 2, is regulated by the electronic processing unit and ends when the input and output shafts associated with the clutch are synchronised at the same speed of rotation.

### The attainment and maintenance of the working pressure

At the end of the stage C, the electronic control unit operates the proportional valve 20 again, increasing the pressure so as to open the sequence valve 15 which is piloted by the line 16 and to put the delivery line 8 into communication with the chamber of the actuator 2. Since the pressure in the line 8 is greater than that achieved by the proportional valve 20 in the delivery line 7, the non-return valve 21 is closed. In this situation, the pressure in the line 7 can be varied at will by the electronic unit by means of the proportional valve 20 in order simultaneously to engage clutch units 1a-3b.

This stage is represented by the portion D of the curve F of Figure 2.

As stated, the line G is the pressure/time curve of the disengagement of one of the other clutch units which is achieved simultaneously with the engagement of the preselected clutch unit described above. The disengagement stage provides for the corresponding on-off solenoid valve 18 to be switched to the position in which the exhaust line 19 is open, causing a drop in pressure which switches the sequence valve 15 so as to cut off communication between the line 8 and the thrust chamber 2.

In this condition, the proportional valve 20 is disconnected from the circuit of the disengaged clutch unit and can thus operate to engage the other clutches.

It is clear from the foregoing that the single proportional pressure-reduction valve 20 enables several clutches to be modulated simultaneously, whilst the pressure on the remaining clutches remains unchanged, so that the engagement/disengagement change-over of gear ratios can be achieved in the manner shown in Figure 2 with several clutches engaged.

The clutch 3b differs from the clutches 1a-2b in that it is of the normally-engaged type. When there is no pressure in the thrust chamber of its actuator 2, the friction discs of the clutch are pressed against the opposing discs by thrust springs in a conventional manner; in these conditions, the clutch 3b can transmit the maximum torque.

When the clutch is to be disengaged, therefore, the chamber of its actuator 2 must be supplied with hydraulic fluid to produce a pressure which can overcome the force generated by the thrust springs and disengage the clutch. Hence, in order to make the engagement of the clutch smooth and gradual, the modulation must be effected at the stage when the pressure is decreasing.

With reference again to Figure 1, the actuator 2 of the clutch 3b is connected to the supply line 7 (and hence to the proportional pressure-reduction valve 20) through a sequence valve 31 which is similar to the sequence valves 15 but is normally open to the exhaust line 19. An electronically-controlled on-off valve 30 similar to the on-off valves 18 controls communication between the thrust chamber 2 of the actuator 3b and the delivery line 8.

The stages of the operation of the clutch 3b are the same as those described in EP-A-315596.

Naturally, the details of construction and forms of embodiment may be varied widely with respect to those described and illustrated, without thereby departing from the scope of the present invention as defined in the claims.

## Claims

1. A hydraulic circuit for the power-shift operation of clutches for tractor gearboxes, in which the clutches have respective friction discs and respective hydraulic , actuators (2) connected to supply and exhaust means by respective valve units (1a-3b) operated by electronically-controlled piloting means for engaging and disengaging the clutches in combination in order to change gear ratios without interrupting the transmission of torque, and in which the valve units include respective electronically-controlled on-off valves (18), respective sequence valves (15) piloted by the pressures in the respective actuators, and an electronically-controlled proportional pressure-reduction valve (20) for supplying the clutch to be engaged according to a predetermined sequence, characterised in that the supply and exhaust means include:
- a single hydraulic pump (3) connected by a first delivery line (7) to the on-off valves (18) through the proportional pressure-reduction valve (20) and respective one-way valves (21), the pump (3) being connected directly by a second delivery line (8) to the sequence valves (15) which are piloted by the pressures in the respective actuators, and
- an exhaust line (19) connected directly to the on/off valves (18),
and in that the predetermined sequence followed by the proportional pressure-reduction valve (20) for supplying the clutch to be engaged provides for an initial stage (A) in which the friction discs of the clutch are brought together rapidly by a pressure of the order of 18 bars, followed by a first intermediate stage (B) in which this movement together is maintained by a pressure of the order of 3 bars, a second intermediate stage (C) in which the pressure is modulated between 3 bars and a working pressure of the order of 20 bars, and a final stage (D) of maintaining the working pressure, in which the actuator is supplied by the respective sequence valve (15) and the respective one-way valve (21) interrupts the communication between the actuator and the electronically-controlled proportional pressure-reduction valve (20).

2. A circuit according to Claim 1 in which at least one of the friction clutches (3b) is of the type which is normally engaged when there is no pressure in its actuator (2), characterised in that that actuator (2) is connected to the first delivery line (7) through a sequence valve (31) and an on-off valve (30) which controls communication between the actuator (2) and the second delivery line (8).

## Patentansprüche

1. Hydraulikkreis zur Betätigung von Lastschaltkupplungen für Zugmaschinengetriebe, bei denen die Kupplungen jeweils Reibscheiben und hydraulische Betätigungsglieder (2) aufweisen, die über entsprechende Ventileinheiten (1a-3b) an eine Versorgungs- und Abflußeinrichtung angeschlossen sind, wobei die Ventileinheiten von elektronisch gesteuerten Steuereinheiten betätigt sind, um die Kupplungen in Kombination ein- und auszukuppeln, um die Übersetzungsverhältnisse zu verändern ohne die Drehmomentübertragung zu unterbrechen, und bei denen die Ventileinheiten jeweils elektronisch gesteuerte Ein-Aus-Ventile (18), von den Drücken in den jeweiligen Betätigungsgliedern gesteuerte Arbeitsfolgeventile (15) und ein elektronisch gesteuertes proportionales Druckreduzierventil (20) umfassen, um die Kupplung zu versorgen, sodaß sie in einer vorgegebenen Abfolge einkuppelt, dadurch gekennzeichnet, daß die Versorgungs- und Abflußeinrichtung umfaßt:
- eine einzige Hydaulikpumpe (3), die durch eine erste Versorgungsleitung (7) über das proportionale Druckreduzierventil (20) und jeweils Einwegventile (21) an die Ein-Aus-Ventile (18) angeschlossen ist, wobei die Pumpe (3) über eine zweite Versorgungsleitung (8) direkt an die Arbeitsfolgeventile (15) angeschlossen ist, die durch die Drücke in den jeweiligen Betätigungsgliedern gesteuert sind, und
- eine direkt an die Ein-Aus-Ventile (18) angeschlossene Abflußleitung (19),
und daß die vorgegebene Abfolge, der vom proportionalen Druckreduzierventil (20) gefolgt wird, um die Kupplung zum Einkuppeln zu versorgen, eine Anfangsphase (A) aufweist, in der die Reibscheiben der Kupplung durch einen Druck in der Größenordnung von 18 bar rasch zusammengebracht werden, gefolgt von einer ersten Zwischenphase (B), in der diese Zusammenbewegung durch einen Druck in der Größenordnung von 3 bar aufrechterhalten wird, einer zweiten Zwischenphase (C), in der der Druck zwischen 3 bar und einem Arbeitsdruck in der Größenordnung von 20 bar moduliert wird, und einer Schlußphase (D) zum Aufrechterhalten des Arbeitsdruckes, in der das Betätigungsglied durch das jeweilige Arbeitsfolgeventil (15) versorgt wird und das jeweilige Einwegventil (21) die Verbindung zwischen dem Betätigungsglied und dem elektronisch gesteuerten proportionalen Druckreduzierventil (20) unterbricht.

2. Hydraulikkreis nach Anspruch 1, bei dem zumindest eine der Reibungskupplungen (3b) von jenem Typ ist, der normalerweise eingekuppelt ist, wenn kein Druck an ihrem Betätigungsglied (2) anliegt, dadurch gekennzeichnet, daß das Betätigungsglied (2) über ein Arbeitsfolgeventil (31) und ein Ein-Aus-Ventil (30), das die Verbindung zwischen dem Betätigungsglied (2) und der zweiten Versorgungsleitung (8) steuert, an die erste Versorgungsleitung (7) angeschlossen ist.

## Revendications

1. Circuit hydraulique permettant d'actionner des embrayages par passage de vitesse en charge pour des transmissions de tracteurs, dans lequel les embrayages ont des disques de friction respectifs et des commandes hydrauliques respectives (2), connectées à des moyens d'alimentation et d'échappement par des unités de vannes respectives (1a à 3b) actionnées par des moyens de pilotage à commande électronique pour enclencher et désenclencher les embrayages en combinaison de manière à modifier les rapports de transmission sans interrompre la transmission du couple de torsion, et dans lequel les unités de vannes comprennent des vannes par tout ou rien (18) respectives à commande électronique, des vannes séquentielles respectives (15) pilotées par les pressions des commandes respectives, et une vanne de détente proportionnelle (20) à commande électronique pour alimenter l'embrayage à enclencher selon une séquence prédéterminée, caractérisé en ce que les moyens d'alimentation et d'échappement comprennent :
- une seule pompe hydraulique (3) connectée par une première conduite de décharge (7) aux vannes par tout ou rien (18) via la vanne de détente proportionnelle (20) et des vannes à une voie respectives (21), la pompe (3) étant connectée directement par une deuxième conduite de décharge (18) aux vannes séquentielles (15) qui sont pilotées par les pressions des commandes respectives, et
- une conduite d'échappement (19) connectée directement aux vannes par tout ou rien (18),
et en ce que la séquence prédéterminée suivie par la vanne de détente proportionnelle (20) pour alimenter l'embrayage à enclencher présente une étape initiale (A) dans laquelle les disques de friction de l'embrayage sont appliqués l'un sur l'autre rapidement par une pression de l'ordre de 18 bars, suivie d'une première étape intermédiaire (B) dans laquelle ce mouvement conjoint est maintenu par une pression de l'ordre de 3 bars, une deuxième étape intermédiaire (C) dans laquelle la pression est modulée entre 3 bars et une pression de travail de l'ordre de 20 bars, et une étape finale (D) de maintien de la pression de travail, dans laquelle la commande est alimentée par la vanne séquentielle respective (15) et la vanne à une voie respective (21) interrompt la communication entre la commande et la vanne de détente proportionnelle (20) à commande électronique.

2. Circuit selon la revendication 1, dans lequel au moins un des embrayages à friction (3b) est du type qui est normalement enclenché lorsqu'il n'y a pas de pression dans sa commande (2), caractérisé en ce que la commande (2) est connectée à la première conduite de décharge (7) via une vanne séquentielle (31) et une vanne par tout ou rien (30) qui commande la communication entre la commande (2) et la deuxième conduite de décharge (8).
